# EUROPÄISCHE PATENTSCHRIFT

(11) **EP 1 033 281 B1**
(45) Veröffentlichungstag und Bekanntmachung des Hinweises auf die Patenterteilung: **31.08.2005**
(21) Anmeldenummer: 00102295.3
(22) Anmeldetag: 17.02.2000
(51) Int. Cl.: B60N 3/06, B60R 21/02

(54) **Radhausseitige Fussabstützung in einem Kraftfahrzeug**
Foot rest for the wheel arch side of a vehicle
Repose-pieds pour le côté du passage de roue d'un véhicule

(30) Priorität: 03.03.1999 DE 19909239
(43) Veröffentlichungstag der Anmeldung: 06.09.2000
(73) Patentinhaber: Volkswagen Aktiengesellschaft, 38436 Wolfsburg (DE)
(72) Erfinder: Heuman, Gert, 38108 Braunschweig (DE); Fechner, Holger, 38440 Wolfsburg (DE); Friedewald, Klaus, Dr., 38104 Braunschweig (DE); Stöwer, Stefan, 38557 Osloss (DE)

(56) Entgegenhaltungen:
- EP-A- 0 798 160
- DE-A- 19 727 598
- PATENT ABSTRACTS OF JAPAN vol. 1999, no. 3, 31. März 1999 (1999-03-31) -& JP 10 329762 A (HONDA MOTOR CO LTD), 15. Dezember 1998 (1998-12-15)

## Beschreibung

Die Erfindung betrifft eine radhausseitige Fußabstützung in einem Kraftfahrzeug.

Relativ häufig - insbesondere während längerer Fahrten - benutzen Fahrzeuginsassen auf den Vordersitzen eines Kraftfahrzeugs die auf ihrer Seite befindlichen vorderen Radhäuser als Fußabstützung; man kann sagen, daß sie ihre der Fahrzeugaußenseite zugekehrten Füße auf den Radhäusern gleichsam ablegen. Insofern bieten die Radhäuser also ohne zusätzlichen Aufwand eine Unterstützung des Fahrkomforts, der zum ermüdungsfreien Fahren und - bezüglich des Fahrers - zur Erhöhung der Fahrsicherheit beiträgt. Eine durch das Radhaus in dieser Weise gewonnene Fußabstützung kann jedoch bei frontalcrashbedingten Deformationen und Rückwärtsverschiebungen des Radhauses gefährlich werden, weil der betreffende Fahrzeuginsasse bestrebt ist, sich mit den Füßen in einem derartigen Crashfall nach vom abzustützen, er also den Fuß nicht von dem Radhaus abheben und beispielsweise zur Spritzwand verlagern wird. In der Regel sind Radhausdeformationen mit einer plötzlichen Änderung des Tangentenwinkels auch an der Stelle der Fußabstützung verbunden, wodurch zumindest die Fußneigung in verletzungsgefährdender Weise plötzlich verändert wird. Auch Aufwärtsbewegungen der fußabstützenden Stelle des Radhauses durch derartige Deformationen können gefährlich sein. Berücksichtigt werden muß dabei auch die Gefahr von Knickbewegungen im Fußgelenk durch plötzliche Veränderung des Neigungswinkels in Querrichtung.

Die JP 10-329762 offenbart einen hinter einer Spritzwand angeordneten Fußraum, wobei zwischen Spritzwand und der Verkleidung des Fußraums ein Deformationselement angeordnet ist. Eine crashbedingte Verlagerung der Spitzwand bewirkt eine Deformation des Deformationselementes und führt somit zu einer reduzierten Krafteinwirkung auf die Verkleidung des Fußraums. Nach diesem Prinzip wirkende Fußstützen sind in den Veröffentlichungen JP 10-297341, JP 10-305747, JP 10-297345, JP 10-297344, JP 10-297343 und JP 10-297342 offenbart. Nachteilig ist hierbei, dass ein zusätzlicher Bauraum für die Deformationselemente benötigt wird.

Eine Gelenkmechanik, die die crashbedingte Verlagerung der Spitzwand in eine Hubbewegung einer den Fußraum nach unten begrenzenden Platte umsetzt, ist in der DE 197 27 598 A1 offenbart. Dabei ist die Platte am Kraftfahrzeugboden mehrfach gelagert.

Eine weitere für die Füße eines Insassen ausgelegte Fußablage ist bekannt aus der DE 44 45 485 C1. In ihr wird eine schubladenartig verlagerbare Wanne beschrieben, die über einen sensorgesteuerten Antrieb aus dem Gefährdungsbereich herausbewegt wird.

Eine gattungsgemäße Fußstütze ist bekannt aus der JP 08-164782, die eine am Fahrzeugboden über eine Schraubverbindung fixierte Fußstütze offenbart, die mit ihrem oberen Ende an einem Fußraumblech nur anliegt. Bei einer crashbedingten Fußraumblechdeformation wird die Fußstütze zwar rückwärts verlagert, das Ausklinken der Schraube aus dem Langloch während der Rückwärtsverlagerung führt aber zu einer frei beweglichen Fußstütze, die nicht mehr kontrolliert geführt wird.

Der Erfindung liegt demgemäß die Aufgabe zugrunde, eine gattungsgemäße Fußabstützung zu schaffen, die einerseits kostengünstig und unter Beanspruchung eines geringen Bauraums einfach ausgeführt ist andererseits aber die beschriebenen, durch frontalcrashbedingte Deformationen und Verschiebungen des jeweiligen Radhauses gegebenen Verletzungsgefahren zumindest weitgehend vermeidet bzw. mindert.

Diese Aufgabe wird gelöst durch eine Fußabstützung mit den Merkmalen des Anspruchs 1.

Die Erfindung sieht als eigentliche Fußabstützung also ein zusätzliches Bauteil in Gestalt einer im wesentlichen plattenförmigen Fußstütze vor, die sich so am Radhaus abstützt, bzw. an einer solchen Stelle des Radhauses durch Einpunktlagerung festgelegt ist, daß bei frontalcrashbedingten Deformationen und Verschiebungen des Radhauses der Anstellwinkel (und der quer dazu verlaufende Kippwinkel) keine zu Fußverletzungen führenden Werte annehmen.

Schlagwortartig kann man also sagen, daß bei der Erfindung gefährliche Deformationen und Verschiebungen des Radhauses bei einem Frontalcrash umgesetzt werden in Rückwärtsverlagerungen der Fußstütze unter weitgehender Wahrung ihres Anstellwinkels.

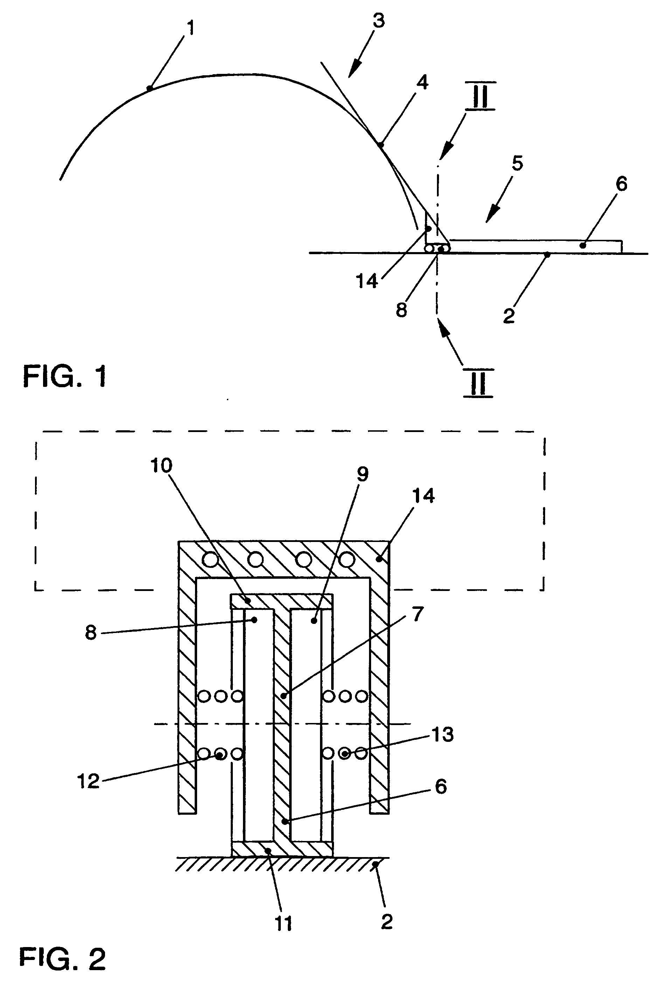

Eine Ausführungsform einer Enßabstützung, die aber nicht die Erfindung betrifft, wird im folgenden anhand der Zeichnung erläutert, deren Figur 1 schematisch eine Seitenansicht wiedergibt, während Figur 2 die in Figur 1 bei II-II angegebene Schnittansicht zeigt.

Das Radhaus des Kraftfahrzeugs ist allgemein mit 1 bezeichnet; seine Form interessiert im einzelnen im Rahmen der Erfindung nicht. Es geht über in den Boden 2 des Kraftfahrzeugs, der im wesentlichen horizontal verläuft; auch hier erfordert die Erfindung keine Besonderheiten.

Während bislang das Radhaus 1 selber als Fußabstützung dient, sieht die Erfindung die separate plattenförmige Fußstütze 3 vor, die unter einem Anstellwinkel a gegen die Horizontale geneigt ist, der sich als fußabstützungsfreundlich erwiesen hat, d.h. der eine bequeme Ablage des Fußes auf der Fußstütze 3 gewährleistet. Dieser Winkel a mag, um ein Beispiel zu nennen, in der Größenordnung von 45° liegen.

Die Fußstütze 3 ist in dem gezeichneten Ausführungsbeispiel nicht auf dem Radhaus 1 gelagert, berührt dieses lediglich bei 4, sondern ihre Lagerung 5 erfolgt am Fahrzeugboden 2 mittels der hier ein I-förmiges Querschnittsprofil (siehe Figur 2) aufweisenden Längsschiene 6. Der Mittelsteg 7 der Längsschiene 6 wird beidseitig von fußstützenseitigen Rollen 8 und 9 in Querrichtung druckbeaufschlagt, die aber in senkrechter Richtung Spiel gegen die querverlaufenden Schenkel 10 und 11 des Schienenprofits haben, so daß sie auf diesen Querschenkeln leicht laufen bzw. rollen können. Die Querkraft, die die Rollen 8 und 9 auf den Mittelsteg 7 ausüben, ist so bemessen, daß im normalen Betrieb des Fahrzeugs die in Figur 1 angegebene Ausgangslage der Fußstütze 3, nämlich ihre Abstützung an der Stelle 4 auf dem Radhaus 1, gewahrt ist. Zur Einstellung dieser Quer- oder Klemmkraft dienen Druckfedern 12 und 13, die sich einerseits auf den Rollen 8 und 9 und andererseits auf den Innenflächen des C-Profils 14 abstützen, das beispielsweise mittels Schrauben die Fußstütze 3 trägt.

Starke Deformationen des Radhauses 1 oder Verschiebungen desselben in Richtung nach hinten (in Figur 1 also nach rechts), wie sie bei einem Frontalcrash auftreten können, werden also umgesetzt in Verlagerungen der Fußstütze 3 ebenfalls nach hinten unter der Wirkung der in der beschriebenen Weise ausgebildeten Lagerung 5 derselben. Wichtig ist, daß dabei der Antstellwinkel a zumindest nicht in gefährlicher Weise verändert wird, er also im wesentlichen konstant bleibt.

Ebenfalls ungeändert bleibt auch der in Querrichtung gemessene Kippwinkel der Fußstütze 3, so daß bei einem Frontalcrash nur eine Rückwärtsparallelbewegung der Fußstütze 3 erfolgt.

Mit der Erfindung ist eine radhausseitige Fußabstützung geschaffen, die unter Wahrung der Vorteile eine derartigen Abstützung mit beherrschbarem Aufwand die Nachteile vermeidet.

## Patentansprüche

1. Radhausseitige Fußabstützung in einem Kraftfahrzeug mit, einer unter einem fußabstützungsfreundlichen Anstellwinkel (a) gegen die Horizontale geneigten, im wesentlichen plattenförmigen Fußstütze (3) hinter dem Radhaus (1), die crashbedingt unter weitgehender Wahrung ihres Anstellwinkels rückwärts verlagerbar ist, **dadurch gekennzeichnet, dass** die Lagerung der Fußstütze (3) als Einpunktlagerung an einer Umfangstelle eines Radhauses (1) vorgesehen ist, an der der Steigungswinkel der Tangente bei einem Frontalcrash im Wesentlichen unverändert bleibt, so dass Deformationen und Verschiebungen des Radhauses bei einem Frontalcrash in Rückwärtsverlagerungen der Fußstütze unter weitgehender Wahrung ihres Anstellwinkels umgesetzt werden.

## Claims

1. Foot rest for the wheel arch side of a vehicle with an essentially plate-shaped foot support (3) behind the wheel arch (1), which foot support is inclined in relation to the horizontal at a setting angle (a) conducive to foot support and can as a result of a crash be dislocated backwards while largely maintaining its setting angle, **characterized in that** the bearing of the foot support (3) is provided in the form of a single-point bearing in a circumferential location of a wheel arch (1) in which the angle of inclination of the tangent remains essentially unchanged during a frontal crash, so that deformations and displacements of the wheel arch during a frontal crash are converted into backward dislocations of the foot support while its setting angle is largely maintained.

## Revendications

1. Support pour les pieds pour le côté du passage de roue dans un véhicule automobile comprenant un repose-pieds (3) essentiellement en forme de plaque, incliné par rapport à l'horizontale d'un angle d'inclinaison (a) favorisant le support des pieds, qui peut être déplacé vers l'arrière sous l'effet d'une collision en conservant encore son angle d'inclinaison, **caractérisé en ce que** le support du repose-pieds (3) est prévu sous forme de support ponctuel à un endroit de la périphérie d'un passage de roue (1) au niveau duquel l'angle d'inclinaison de la tangente reste essentiellement inchangé en cas de collision frontale, de sorte que les déformations et déplacements du passage de roue en cas de collision frontale soient convertis en décalages vers l'arrière du repose-pieds en conservant encore son angle d'inclinaison.
